# EUROPEAN PATENT APPLICATION

(11) **EP 4 737 838 A1**
(43) Date of publication of application: **06.05.2026**
(21) Application number: 24830199.6
(22) Date of filing: 13.05.2024
(51) Int. Cl.: F28C 1/14, F25B 1/00

(54) **COOLING TOWER SYSTEM**

(30) Priority: 28.06.2023 CN 202310779717
(71) Applicant: Shenzhen Envicool Technology Co., Ltd, Shenzhen, Guangdong 518000 (CN)
(72) Inventor: SONG, Bin, Shenzhen, Guangdong 518000 (CN); LIU, Xiang, Shenzhen, Guangdong 518000 (CN); CHEN, Yunwei, Shenzhen, Guangdong 518000 (CN); WU, Gang, Shenzhen, Guangdong 518000 (CN); WU, Ye, Shenzhen, Guangdong 518000 (CN)
(74) Representative: Torggler & Hofmann Patentanwälte - Innsbruck
(86) International application number: PCT/CN2024/092819
(87) International publication number: WO 2025/001551

(57) **Abstract**

A cooling tower system, comprising: a first cooling cycle system, which comprises a first heat absorption portion, a first wet-cooling heat dissipation portion and a first dry-cooling heat dissipation portion that are in communication; a second cooling cycle system, which comprises a second heat absorption portion, a second wet-cooling heat dissipation portion and a second dry-cooling heat dissipation portion, which are in communication, wherein the first heat absorption portion and the second heat absorption portion are used for performing heat absorption on the same object; and a cooling tower, wherein in the cooling tower, the first wet-cooling heat dissipation portion and the second dry-cooling heat dissipation portion are connected in series in a first air duct, the second wet-cooling heat dissipation portion and the first dry-cooling heat dissipation portion are connected in series in a second air duct, and the first air duct and the second air duct are arranged in parallel. When it is necessary to turn on a wet-cooling heat dissipation portion and a dry-cooling heat dissipation portion of one cooling cycle system, the wet-cooling heat dissipation portion and the dry-cooling heat dissipation portion can be respectively turned on in different air ducts, such that interference between the wet-cooling heat dissipation portion and the dry-cooling heat dissipation portion of the same cooling cycle systems can be effectively reduced, and thus, a better heat exchange effect can be achieved when a single cooling cycle system is turned on.

## Description

The present application claims the priority to Chinese Patent Application No. 202310779717.X, titled "COOLING TOWER SYSTEM", filed with the China National Intellectual Property Administration on June 28 2023, the entire disclosure of which is incorporated herein by reference.

### FIELD

The present application relates to the technical field of cooling, and in particular to a cooling tower system.

### BACKGROUND

Some current cooling tower systems enable cooling circulation through both a dry zone and a wet zone for better heat dissipation. Further, in order to improve adjustability and cooling capacity, multiple cooling circulation systems are usually provided. After long-term observation, the inventor has found that the overall heat exchanging efficiency of the current cooling tower system having multiple independent cooling circulation systems can be further improved.

Therefore, it is desired for those skilled in the art to effectively improve heat exchanging efficiency of a cooling tower system.

### SUMMARY

In view of above, an object of the present application is to provide a cooling tower system, which can effectively improve heat exchanging efficiency.

In order to achieve the object, the present application provides the following technical solutions.

A cooling tower system includes a first cooling circulation system, a second cooling circulation system, and a cooling tower. The first cooling circulation system includes a first heat absorption section, a first wet-cool heat dissipation section and a first dry-cool heat dissipation section, which are in communication. The second cooling circulation system includes a second heat absorption section, a second wet-cool heat dissipation section, and a second dry-cool heat dissipation section, which are in communication. The first heat absorption section and the second heat absorption section are used to absorb heat from a same object. A first air duct and a second air duct are provided in the cooling tower. The first wet-cool heat dissipation section and the second dry-cool heat dissipation section are connected in series in the first air duct, and the second wet-cool heat dissipation section and the first dry-cool heat dissipation section are connected in series in the second air duct, and the first air duct and the second air duct are arranged in parallel.

In the cooling tower system mentioned above, the wet-cool heat dissipation section and the dry-cool heat dissipation section of the first cooling circulation system 1 and the wet-cool heat dissipation section and the dry-cool heat dissipation section of the second cooling circulation system 2 are arranged in an alternate manner in the cooling tower 3. Therefore, when one of the cooling circulation systems is to be used, its wet-cool heat dissipation section and dry-cool heat dissipation section can be switched on in different air ducts, which can effectively reduce the interference between the wet-cool heat dissipation section and the dry-cool heat dissipation section of the same cooling circulation system, thereby achieving a better heat exchanging efficiency when the single cooling circulation system is in operation. When the two cooling circulation systems activate the wet-cool heat dissipation section and the dry-cool heat dissipation section respectively, their operating states remain unchanged. When two cooling circulation systems are in operation simultaneously, and both the wet-cool heat dissipation sections and the dry-cool heat dissipation sections of the two cooling circulation systems are in operation simultaneously, the arrangement in an alternate manner mentioned above is beneficial for the heat balance between the two cooling circulation systems. Therefore, this cooling tower system can effectively address the issue of poor heat exchanging efficiency of the conventional cooling tower system.

Preferably, the first wet-cool heat dissipation section is located at an air inlet side of the second dry-cool heat dissipation section in the first air duct, and the second wet-cool heat dissipation section is located at an air inlet side of the first dry-cool heat dissipation section in the second air duct.

Preferably, a refrigerant inlet end of the first wet-cool heat dissipation section is in communication with a refrigerant outlet end of the first dry-cool heat dissipation section in a circulation path of the first cooling circulation system, and a refrigerant inlet end of the second wet-cool heat dissipation section is in communication with a refrigerant outlet end of the second dry-cool heat dissipation section in a circulation path of the second cooling circulation system.

Preferably, the first cooling circulation system is configured as a water cooled circulation system, and the second cooling circulation system is configured as a mechanical refrigeration circulation system.

Preferably, the first heat absorption section is located closer to an upstream of the air ducts than the second heat absorption section.

Preferably, the first heat absorption section and the second heat absorption section are configured to share the air ducts.

Preferably, the cooling tower system further includes a heat exchange system. A heat dissipation section of the heat exchange system is in thermal contact with both the first heat absorption section and the second heat absorption section, and a heat absorption section of the heat exchange system is in contact with a heat source.

Preferably, each of the first heat absorption section and the second heat absorption section is provided with a fan to accelerate flow of air.

Preferably, an air inlet of the first air duct is arranged facing away from an air inlet of the second air duct.

Preferably, an air outlet of the first air duct and an air outlet of the second air duct are each provided with a fan.

### BRIEF DESCRIPTION OF THE DRAWINGS

In order to clearly illustrate the embodiments of the present application or the technical solutions in the prior art, a brief introduction will be given to the accompanying drawings required for the description of the embodiments or the prior art. It is obvious that the accompanying drawings described below are only some embodiments of the present application. For those skilled in the art, other drawings can be obtained based on these drawings without paying creative work.
FIG. 1 is a schematic structural view of a cooling tower system according to an embodiment of the present application; and
FIG. 2 is a schematic structural view of a cooling tower system according to another embodiment of the present application.

Numeral references in the accompany drawings are listed below:
1 first cooling circulation system, 2 second cooling circulation system, 3 cooling tower, 4 external fan, 5 internal fan, 6 heat exchange system;
11 first wet-cool heat dissipation section, 12 first dry-cool heat dissipation section, 13 first heat absorption section, 14 circulating pump;
21 second wet-cool heat dissipation section, 22 second dry-cool heat dissipation section, 23 second heat absorption section, 24 compressor, 25 throttling component;
31 first air duct, 32 second air duct.

### DETAILED DESCRIPTION OF THE EMBODIMENTS

A cooling tower system is provided according to embodiments of the present application, which effectively addresses the issues of poor heat exchanging efficiency in the cooling tower system.

The technical solutions in the embodiments of the present application will be clearly and completely described in conjunction with the accompanying drawings below. Obviously, the described embodiments are only a part of the embodiments of the present application, not all of them. Based on the embodiments of the present application, all other embodiments obtained by those skilled in the art without creative labor are within the protection scope of the present application.

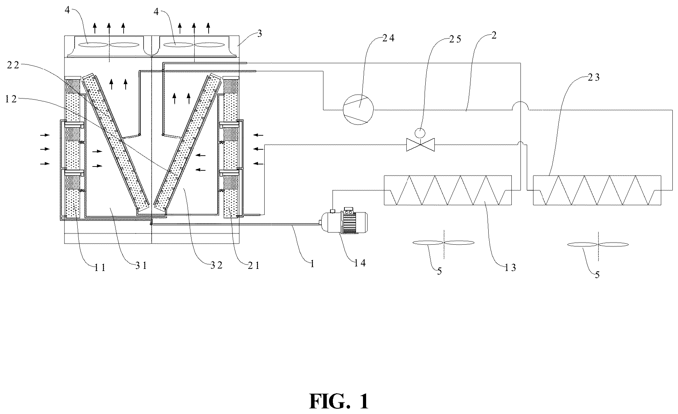

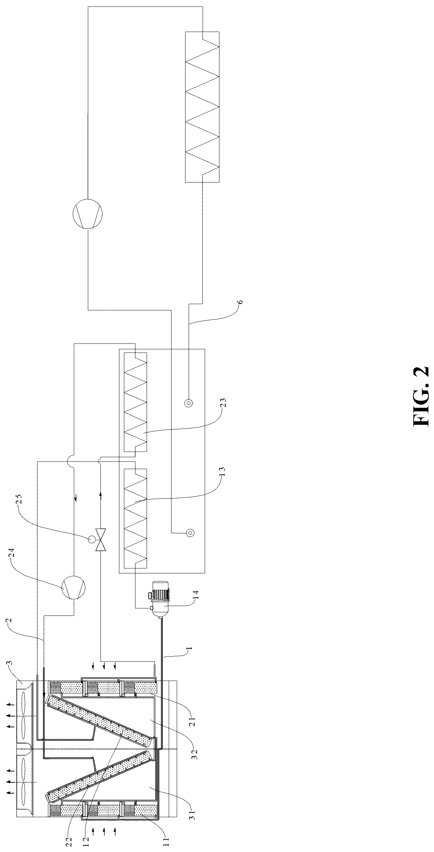

Refer to FIGS. 1 to 2. FIG. 1 is a schematic structural view of a cooling tower system according to an embodiment of the present application, and FIG. 2 is a schematic structural view of a cooling tower system according to another embodiment of the present application.

In some embodiments, a cooling tower system is provided. Specifically, the cooling tower system mainly includes a first cooling circulation system 1, a second cooling circulation system 2, and a cooling tower 3.

Either the first cooling circulation system 1 or the second cooling circulation system 2 may be configured as a water cooling system or a mechanical refrigeration system. Each of the first cooling circulation system 1 and the second cooling circulation system 2 mainly includes a heat dissipation section and a heat absorption section. The heat absorption section is used to absorb heat, and the heat dissipation section is used to dissipate heat. In the mechanical refrigeration system, the heat absorption section is generally configured as an evaporator, and the heat dissipation section is generally configured as a condenser. It should be noted that one or more first cooling circulation systems 1 may be provided, and one or more second cooling circulation systems 2 may be provided. Optionally, another cooling circulation system may be further provided.

For convenience of explanation, the first cooling circulation system 1 includes a first heat absorption section 13, a first wet-cool heat dissipation section 11, and a first dry-cool heat dissipation section 12, which are sequentially in communication. The second cooling circulation system 2 includes a second heat absorption section 23, a second wet-cool heat dissipation section 21, and a second dry-cool heat dissipation section 22, which are sequentially in communication. The first heat absorption section 13 and the second heat absorption section 23 are used to absorb heat from a same object. The first heat absorption section 13 and the second heat absorption section 23 may be located at the same position or different positions while absorbing heat from the same object. That is, the heat dissipation object for the first heat absorption section 13 is at least partially the same as that for the second heat absorption section 23, so that the first heat absorption section 13 and the second heat absorption section 23 can perform the same function on the heat dissipation object. The first cooling circulation system 1 and the second cooling circulation system 2 each include a wet-cool heat dissipation section and a dry-cool heat dissipation section. For the wet-cool heat dissipation section, liquid is sprayed to contact the wet-cool heat dissipation section and is evaporated, and then the resultant vapor flows away to carry the heat away. For the dry-cool heat dissipation section, air flows through the dry-cool heat dissipation section to achieve heat exchange, and then takes the heat away.

Two air ducts are provided in the cooling tower 3, which are a first air duct 31 and a second air duct 32, respectively. The first air duct 31 and the second air duct 32 are arranged in parallel. A common fan may be shared by the first air duct 31 and the second air duct 32, or different fans may be used to accelerate the flow of the air in the ducts. In an embodiment, the first air duct 31 and the second air duct 32 are provided with different fans.

The first wet-cool heat dissipation section 11 and the second dry-cool heat dissipation section 22 are connected in series in the first air duct 31, and the second wet-cool heat dissipation section 21 and the first dry-cool heat dissipation section 12 are connected in series in the second air duct 32. The sentence "the first wet-cool heat dissipation section 11 and the second dry-cool heat dissipation section 22 are connected in series in the first air duct 31" means that the air passes through the first wet-cool heat dissipation section 11 and the second dry-cool heat dissipation section 22 in sequence, or passes through the second dry-cool heat dissipation section 22 and the first wet-cool heat dissipation section 11 in sequence. The sentence "the second wet-cool heat dissipation section 21 and the first dry-cool heat dissipation section 12 are connected in series in the second air duct 32" means that the air passes through the second wet-cool heat dissipation section 21 and the first dry-cool heat dissipation section 12 in sequence, or passes through the first dry-cool heat dissipation section 12 and the second wet-cool heat dissipation section 21 in sequence.

In the cooling tower system mentioned above, the wet-cool heat dissipation section and the dry-cool heat dissipation section of the first cooling circulation system 1 and the wet-cool heat dissipation section and the dry-cool heat dissipation section of the second cooling circulation system 2 are arranged in an alternate manner in the cooling tower 3. Therefore, when one of the cooling circulation systems is to be used, its wet-cool heat dissipation section and dry-cool heat dissipation section can be switched on in different air ducts, which can effectively reduce the interference between the wet-cool heat dissipation section and the dry-cool heat dissipation section of the same cooling circulation system, thereby achieving a better heat exchanging efficiency when the single cooling circulation system is in operation. When the two cooling circulation systems activate the wet-cool heat dissipation section and the dry-cool heat dissipation section respectively, their operating states remain unchanged. When two cooling circulation systems are in operation simultaneously, and both the wet-cool heat dissipation sections and the dry-cool heat dissipation sections of the two cooling circulation systems are in operation simultaneously, the arrangement in an alternate manner mentioned above is beneficial for the heat balance between the two cooling circulation systems. Therefore, this cooling tower system can effectively address the issue of poor heat exchanging efficiency of the conventional cooling tower system.

In some embodiments, the arrangement sequence of the wet-cool heat dissipation section and the dry-cool heat dissipation section in the air duct is not limited. However, if the dry-cool heat dissipation section is located upstream of the wet-cool heat dissipation section, the high-temperature air may enter the wet-cool heat dissipation section to accelerate the evaporation of liquid at the wet-cool heat dissipation section, which may increase the amount of scaling and thus reduce the service life of the wet-cool heat dissipation section. Therefore, it is preferred to locate the wet-cool heat dissipation section upstream of the dry-cool heat dissipation section. Specifically, in the first air duct 31, the first wet-cool heat dissipation section 11 is located at an air inlet side of the second dry-cool heat dissipation section 22. In the second air duct 32, the second wet-cool heat dissipation section 21 is located at an air inlet side of the first dry-cool heat dissipation section 12. Therefore, the air can have a high humidity after flowing through the wet-cool heat dissipation section from the outside, and can be further evaporated after flowing to the dry-cool heat dissipation section and thus can carry away more heat.

In some embodiments, the refrigerant or other cooling liquid circulated in any of the cooling circulation systems may first flow through the wet-cool heat dissipation section and then flow through the dry-cool heat dissipation section, or may first flow through the dry-cool heat dissipation section and then flow through the wet-cool heat dissipation section. Alternatively, the dry-cool heat dissipation section and the wet-cool heat dissipation section may also be connected in parallel rather than in series as described above.

In some embodiments, preferably, a refrigerant inlet end of the first wet-cool heat dissipation section 11 is in communication with a refrigerant outlet end of the first dry-cool heat dissipation section 12 in the circulation path of the first cooling circulation system 1, and a refrigerant inlet end of the second wet-cool heat dissipation section 21 is in communication with a refrigerant outlet end of the second dry-cool heat dissipation section 22 in the circulation path of the second cooling circulation system 2. The temperature in the wet zone is generally lower than or equal to the temperature in the dry zone. Especially, when the air first passes through the wet zone and then through the dry zone, it can ensure that the temperature in the wet zone is lower than that in the dry zone. Therefore, if the refrigerant flows through the dry zone first and then flows through the wet zone, it can be further cooled.

In some embodiments, the first cooling circulation system 1 may be configured as a water cooled circulation system, and the second cooling circulation system 2 may be configured as a mechanical refrigeration circulation system. In the mechanical refrigeration stage, the internal compressor 24 is switched off, and a temperature difference is generated since the temperature in the wet zone is lower than that in the dry zone during use, so as to promote circulation, in addition to the circulation promoted by the pump and/or compressor 24.

In some embodiments, one of the two cooling circulation systems is a water cooled circulation system and the other is a mechanical refrigeration circulation system. In use, operating the water cooled circulation system and the mechanical refrigeration circulation system independently has different cooling effects, which can achieve a multi-level cooling adjustment. In case of the requirement for a low cooling temperature, the water cooling circulation system may be in operation alone. When the water cooling circulation system is in operation, there are three operation modes: operating the wet zone alone, operating the dry zone alone, and operating both the wet and dry zones, which may be selected according to the ambient temperature and cooling requirements. In case of the requirement for a lower cooling temperature, the water cooling circulation system is switched off whereas the mechanical refrigeration circulation system is in operation. Similarly, when the mechanical refrigeration circulation system is in operation, there are three operation modes: operating the wet zone alone, operating the dry zone alone, and operating both the wet and dry zones. In case of the requirement for a lowest cooling temperature, the water cooling circulation system and the mechanical refrigeration circulation system are in operation simultaneously.

The first cooling circulation system 1 is a water cooled circulation system, and includes the first dry-cool heat dissipation section 12, the first wet-cool heat dissipation section 11, the circulating pump 14, and the first heat absorption section 13, which are sequentially connected. The circulating pump is used to accelerate the flow of the fluid in the first cooling circulation system.

The second cooling circulation system 2 is a mechanical refrigeration circulation system, and includes the second dry-cool heat dissipation section 22, the second wet-cool heat dissipation section 21, a throttling component 25, a second heat absorption section 23, and a compressor 24, which are sequentially connected.

In some embodiments, the first heat absorption section 13 and the second heat absorption section 23 may share the air duct, for example, share the compressor.

The first heat absorption section 13 is located closer to the upstream of the air ducts than the second heat absorption section 23. When two cooling circulation systems are in operation simultaneously, the first heat absorption section 13 absorbs heat in advance and thus the temperature of the first heat absorption section 13 cannot be too low. Therefore, by the above arrangement, it can achieve a better comprehensive temperature drop and effectively reduce the working pressure of the second refrigerant circulation system.

In some embodiments, the first heat absorption section 13 and the second heat absorption section 23 may be configured to share the air duct and share the internal fan 5. Thus, the overall structure is compact and the manufacturing cost is low. In some situations, the first cooling circulation system 1 and the second cooling circulation system 2 are operated at different times, which has less mutual interference between the first heat absorption section 13 and the second heat absorption section 23 and is beneficial to obtain a greater air volume and improve heat absorption efficiency.

In some embodiments, as shown in FIG. 1, different fans may be provided to accelerate the flow of the air in the first heat absorption section 13 and the flow of the air in the second heat absorption section 23, respectively. That is, multiple internal fans 5 may be provided to accelerate the flow of the air at the first heat absorption section 13 and the flow of the air at the second heat absorption section 23, respectively.

Some embodiments as shown in FIG. 2 are applied to the case of limited space at the heat source where cannot accommodate multiple heat absorption sections, in view of the fact that the first heat absorption section 13 and the second heat absorption section 23 are both provided to dissipate heat from the heat source simultaneously. In that case, it is preferred that a heat exchange system 6 is further provided, with a heat dissipation section of the heat exchange system 6 being in thermal contact with both the first heat absorption section 13 and the second heat absorption section 23, and a heat absorption section of the heat exchange system 6 being in contact with the heat source, so that the heat exchange system 6 functions as an intermediate system, which absorbs heat from the first heat absorption section 13 and the second heat absorption section 23 and then transfers the heat to the heat source. Therefore, it is applied to the case of limited space at the heat source and beneficial to uniformly transfer heat.

In some embodiments, the cooling tower 3 includes a first air duct 31 and a second air duct 32, which are arranged in parallel. The air inlets of the two air ducts are arranged oppositely so as to provide a greater air intake range. For example, the air inlets of the two air ducts are arranged horizontally and opposite to each other. The air outlets of the two air ducts are arranged side by side and oriented upwards.

In some embodiments, the air outlet of the first air duct 31 and the air outlet of the second air duct 32 may be each provided with an external fan 4. Alternatively, the air inlet of the first air duct 31 and the air inlet of the second air duct 32 may be each provided with the external fan.

The various embodiments in the specification are described in progressive manner, and each embodiment emphasizes its differences from other embodiments. The same and similar parts between the various embodiments can be referred to each other.

The above description of the disclosed embodiments enables those skilled in the art to implement or use the present application. Various modifications to these embodiments will be apparent to those skilled in the art, and the general principles defined herein can be implemented in other embodiments without departing from the spirit or scope of the present application. Therefore, the present application will not be limited to the embodiments shown herein, but will be within the widest scope consistent with the principles and features disclosed herein.

## Claims

1. A cooling tower system, comprising:
a first cooling circulation system;
a second cooling circulation system; and
a cooling tower, wherein
the first cooling circulation system comprises a first heat absorption section, a first wet-cool heat dissipation section, and a first dry-cool heat dissipation section, which are in communication;
the second cooling circulation system comprises a second heat absorption section, a second wet-cool heat dissipation section, and a second dry-cool heat dissipation section, which are in communication, wherein the first heat absorption section and the second heat absorption section are configured to absorb heat from a same object; and
a first air duct and a second air duct are provided in the cooling tower, the first wet-cool heat dissipation section and the second dry-cool heat dissipation section are connected in series in the first air duct, the second wet-cool heat dissipation section and the first dry-cool heat dissipation section are connected in series in the second air duct, and the first air duct and the second air duct are arranged in parallel

2. The cooling tower system according to claim 1, wherein
the first wet-cool heat dissipation section is located at an air inlet side of the second dry-cool heat dissipation section in the first air duct, and the second wet-cool heat dissipation section is located at an air inlet side of the first dry-cool heat dissipation section in the second air duct.

3. The cooling tower system according to claim 2, wherein
a refrigerant inlet end of the first wet-cool heat dissipation section is in communication with a refrigerant outlet end of the first dry-cool heat dissipation section in a circulation path of the first cooling circulation system, and a refrigerant inlet end of the second wet-cool heat dissipation section is in communication with a refrigerant outlet end of the second dry-cool heat dissipation section in a circulation path of the second cooling circulation system.

4. The cooling tower system according to claim 3, wherein
the first cooling circulation system is configured as a water cooled circulation system, and the second cooling circulation system is configured as a mechanical refrigeration circulation system.

5. The cooling tower system according to claim 4, wherein,
the first heat absorption section is located closer to an upstream of the air ducts than the second heat absorption section.

6. The cooling tower system according to any one of claims 1 to 5, wherein
the first heat absorption section and the second heat absorption section are configured to share the air ducts.

7. The cooling tower system according to any one of claims 1 to 4, further comprising a heat exchange system, wherein
a heat dissipation section of the heat exchange system is in thermal contact with both the first heat absorption section and the second heat absorption section, and a heat absorption section of the heat exchange system is in contact with a heat source.

8. The cooling tower system according to any one of claims 1 to 4, wherein
a fan is provided for each of the first heat absorption section and the second heat absorption section to accelerate flow of air.

9. The cooling tower system according to any one of claims 1 to 4, wherein
an air inlet of the first air duct is arranged opposite to an air inlet of the second air duct.

10. The cooling tower system according to any one of claims 1 to 4, wherein
an air outlet of the first air duct and an air outlet of the second air duct are each provided with a fan.
